(19) Europäisches Patentamt
European Patent Office
Office européen des brevets

(11) EP 0 545 140 B1

(12) EUROPÄISCHE PATENTSCHRIFT

(45) Veröffentlichungstag und Bekanntmachung des Hinweises auf die Patenterteilung:
**29.01.1997 Patentblatt 1997/05**

(51) Int Cl.6: **C08F 210/02**, C08F 4/622

(21) Anmeldenummer: **92119651.5**

(22) Anmeldetag: **19.11.1992**

(54) **Ethylen-Copolymerisate niederer Dichte**

Low density ethylene copolymers

Copolymères d'éthylène de faible densité

(84) Benannte Vertragsstaaten:
**BE DE ES FR GB NL**

(30) Priorität: **29.11.1991 DE 4139261**

(43) Veröffentlichungstag der Anmeldung:
**09.06.1993 Patentblatt 1993/23**

(73) Patentinhaber: **BASF Aktiengesellschaft**
**67063 Ludwigshafen (DE)**

(72) Erfinder:
- **Rieger, Bernhard, Dr.**
  **W-7401 Nehren (DE)**
- **Lilge, Dieter, Dr.**
  **W-6703 Limburgerhof (DE)**
- **Evertz, Kaspar, Dr.**
  **W-6707 Schifferstadt (DE)**
- **Konrad, Rainer, Dr.**
  **W-6701 Goennheim (DE)**

(56) Entgegenhaltungen:
**EP-A- 0 399 348**
**EP-A- 0 406 912**
**EP-A- 0 413 326**
**EP-A- 0 420 436**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 545 140 B1

Printed by Jouve, 75001 PARIS (FR)

## Beschreibung

Die vorliegende Erfindung betrifft Ethylen-Copolymerisate mit einer Dichte von höchstens 0,945 $g/cm^3$, erhältlich durch Polymerisation von einem Gemisch, enthaltend Ethylen, Comonomere und aliphatische Kohlenwasserstoffe durch Zugabe einer aromatischen Kohlenwasserstofflösung eines Katalysatorsystems, enthaltend als aktive Bestandteile unverbrückte Metallocenkomplexe von Metallen der IV und V. Nebengruppe des Periodensystems und oligomere Aluminiumoxidverbindungen, wobei der Zusatz von Organoaluminiumverbindungen, die einen von n-Alkylgruppen verschiedenen Kohlenwasserstoffrest tragen, ausgeschlossen ist.

Weiterhin betrifft die Erfindung Verfahren zur Herstellung derartiger Ethylen-Copolymerisate, deren Verwendung zur Herstellung von Fasern, Folien und Formkörpern sowie die hierbei erhältlichen Fasern, Folien und Formkörper aus den Ethylen-Copolymerisaten.

Viele Materialeigenschaften von Ethylen-Copolymerisaten werden nicht nur durch die Molmasse und die Art des Comonomeren bestimmt, sondern vor allem durch die Molmassen- und Comonomerenverteilung. Hierzu zählen beispielsweise die Bruchmechanik solcher Materialien und das Verkleben von Polyethylenfolien durch niedermolekulare, hoch comonomerhaltige Polymeranteile.

Konventionelle Ziegler-Natta-Katalysatoren auf der Basis von trägergestützten Titan-, Zirkon- oder Vanadinverbindungen besitzen den Nachteil, daß bei der Copolymerisation von Ethylen mit $C_3$- bis $C_{10}$-Alk-1-enen solche niedermolekularen, comonomerreichen Polymerketten entstehen. Die Verteilung der Comonomeren ist inhomogen und abhängig von der Kettenlänge, wie in der EP-A 70 220 beschrieben. Durch den bevorzugten Einbau der Comonomeren in die kurzen Ketten werden bei der Herstellung von Polyethylen niederer Dichte hohe Gewichtsanteile an Comonomer benötigt, um den Einbau einer ausreichenden Menge derselben in den höhermolekularen Produktanteilen zu gewährleisten.

Mit Metallocenkatalysatorsystemen können zwar Ethylen-Copolymerisate erzeugt werden, die eine gleichmäßigere Comonomerenverteilung aufweisen, wie in der WO 88/04672 beschrieben, jedoch auch eine enge Molmassenverteilung, was wiederum zu schlechterer Verarbeitbarkeit führt.

Aus der EP-A 406 912 ist ein Verfahren zur Herstellung von Polyolefinen bekannt, bei dem das Katalysatorsystem aus einem Metallocenkomplex, einem Aluminoxan und einer Organoaluminiumverbindung, die einen von n-Alkylgruppen verschiedenen Kohlenwasserstoffrest trägt, besteht.

Die EP-A 399 348 beschreibt Verfahren zur Herstellung von Ethylenpolymeren, bei denen als Metallocenkomplexe verbrückte Komplexe eingesetzt werden.

Aufgabe der vorliegenden Erfindung war es daher, Ethylen-Copolymerisate niederer Dichte zur Verfügung zu stellen, die die genannten Nachteile nicht aufweisen und gleichzeitig eine gute Morphologie zeigen.

Demgemäß wurden die eingangs definierten Ethylen-Copolymerisate niederer Dichte gefunden. Außerdem wurden Verfahren zur Herstellung derartiger Ethylen-Copolymerisate, deren Verwendung zur Herstellung von Fasern, Folien und Formkörpern sowie die hierbei erhältlichen Fasern, Folien und Formkörper aus den Ethylen-Copolymerisaten gefunden.

Die zur Herstellung der erfindungsgemäßen Ethylen-Copolymerisate eingesetzten aromatischen Kohlenwasserstofflösungen von Katalysatorsystemen enthalten als aktive Bestandteile u.a. Metallocenkomplexe von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über $\pi$-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem $C_1$- bis $C_{10}$-Alkyl, beispielsweise einer Methyl-, Ethyl-, Propyl- oder Butylgruppe, verknüpft sein kann.

Besonders geeignete Metallocenkomplexe lassen sich durch folgende allgemeine Formel I kennzeichnen:

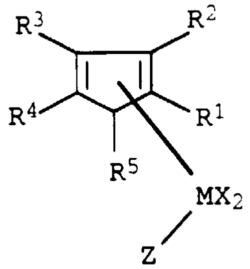

I

in der die Substituenten folgende Bedeutung haben:

M — Titan, Zirkonium, Hafnium, Vanadium, Niob oder Tantal,

X — Fluor, Chlor, Brom, Iod, Wasserstoff, $C_1$- bis $C_{10}$-Alkyl, $C_6$- bis $C_{15}$-Aryl oder $-OR^6$,

wobei $R^6$ — $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,

$R^1$ bis $R^5$ — Wasserstoff, $C_1$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit

$R^7$ — $C_1$- bis $C_{10}$-Alkyl, $C_6$- bis $C_{15}$-Aryl oder $C_3$- bis $C_{10}$-Cycloalkyl,

Z — für X oder

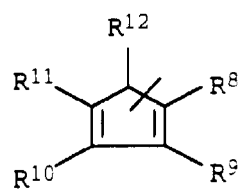

steht,

wobei die — Reste $R^8$ bis $R^{12}$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit

$R^{13}$ — $C_1$- bis $C_{10}$-Alkyl, $C_6$- bis $C_{15}$-Aryl oder $C_3$- bis $C_{10}$-Cycloalkyl.

Von den Metallocenkomplexen der allgemeinen Formel I sind

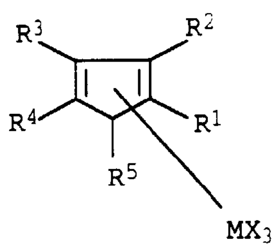

Ia

und

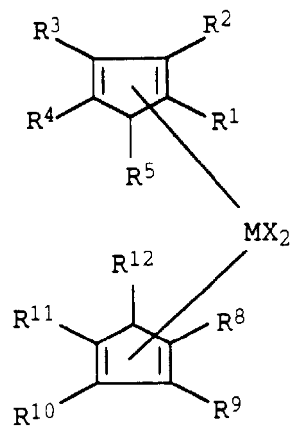

Ib

bevorzugt.

Unter der Bezeichnung Metallocene werden also nicht nur die Bis(η-Cyclopentadienyl)-Metall-Komplexe verstanden.

Von den Verbindungen der Formel Ia sind insbesondere diejenigen bevorzugt, in denen

| | |
|---|---|
| M | Titan, Zirkonium oder Hafnium, |
| X | Chlor und |
| $R^1$ bis $R^5$ | Wasserstoff oder $C_1$- bis $C_4$-Alkyl bedeuten. |

Von den Verbindungen der Formel Ib sind als bevorzugt diejenigen zu nennen, bei denen

| | |
|---|---|
| M | für Zirkonium oder Hafnium steht, |
| X | für Chlor, $C_1$- bis $C_4$-Alkyl oder Phenyl, |
| $R^1$ bis $R^5$ | Wasserstoff, $C_1$- bis $C_4$-Alkyl oder $Si(R^7)_3$, |
| $R^8$ bis $R^{12}$ | Wasserstoff, $C_1$- bis $C_4$-Alkyl oder $Si(R^{13})_3$ bedeuten. |

Insbesondere sind die Verbindungen der Formel Ib geeignet, in denen die Cyclopentadienylreste gleich sind, bevorzugt sind die unsubstituierten Cyclopentadienylreste.

Beispiele für besonders geeignete Verbindungen sind u.a.: Bis(cyclopentadienyl)-zirkoniumdichlorid, Bis(pentamethylcyclopentadienyl)-zirkoniumdichlorid, Bis(cyclopentadienyl)-diphenylzirkonium, Bis(methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumchlorid sowie die entsprechenden Dimethylzirkoniumverbindungen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metallocenkomplexe können auch in kationischer Form vorliegen, wie in der EP-A 277 003 und der EP-A 277 004 beschrieben wird. Weiterhin kann auch μ-Oxo-bis-(chlorobiscyclopentadienyl)zirkonium als Metallocenkomplex verwendet werden.

Neben den Metallocenkomplexen enthalten die zur Herstellung der erfindungsgemäßen Ethylen-Copolymerisate eingesetzten Katalysatorsysteme noch oligomere Aluminiumoxidverbindungen. Geeignet sind beispielsweise offenkettige oder cyclische Alumoxanverbindungen der allgemeinen Formel II oder III

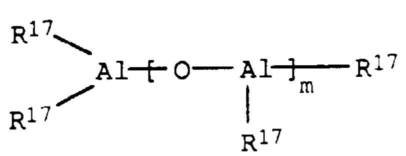

II

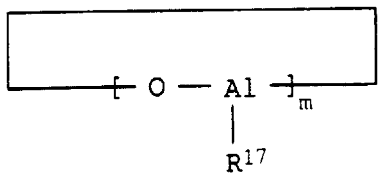

III

wobei $R^{17}$ eine $C_1$- bis $C_4$-Alkylgruppe, bevorzugt Methyl- oder Ethylgruppe bedeutet und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen, wobei jedoch der Zusatz von Organoaluminiumverbindungen, die einen von n-Alkylgruppen verschiedenen Kohlenwasserstoffrest tragen, ausgeschlossen ist.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1 liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Die aromatischen Kohlenwasserstoff lösungen dieser Katalysatorsysteme werden nun zu einem Gemisch, enthaltend Ethylen, Comonomere und aliphatische Kohlenwasserstoffe gegeben. Die Katalysatorsysteme können entweder auf einmal, portionsweise oder kontinuierlich dem Polymerisationsgemisch zugeführt werden.

Als Comonomere sind $C_3$- bis $C_{10}$-Alk-1-ene sowie cyclische Alkene, die keine Kohlenwasserstoffreste als Substituenten an der Doppelbindung haben als bevorzugt zu nennen, insbesondere Propen, But-1-en, Pent-1-en, Hex-1-en und Cyclopenten. Diese Comonomeren können einzeln oder als Mischungen eingesetzt werden.

Als aliphatische Kohlenwasserstoffe eignen sich solche, in denen die Katalysatorsysteme unter den Reaktionsbedingungen üblicherweise zu weniger als 5 g/l löslich sind. Als bevorzugt haben sich $C_4$- bis $C_{15}$-Alkane, insbesondere i-Butan, n-Hexan und n-Heptan erwiesen. Weiterhin $C_5$- bis $C_{15}$-Cycloalkane, insbesondere Cyclopentan und Cyclohexan, außerdem hochsubstituierte Alkene, d.h. Alkene, mit mindestens einem Substituenten an der Doppelbindung, wobei die Doppelbindung nicht endständig ist, beispielsweise 2,3-Dimethyl-but-2-en und 1-Methylcyclohexen sowie Dieselöl, Paraffinöl und Benzin. Besonders bevorzugt werden jedoch $C_4$- bis $C_{15}$-Alkane. Mischungen verschiedener aliphatischer Kohlenwasserstoffe können ebenfalls eingesetzt werden.

Die Menge an Comonomeren beträgt üblicherweise 1 bis 25 Gew.-%, bevorzugt 3 bis 15 Gew.-%, bezogen auf Ethylen.

Die Herstellung dieser Copolymerisate kann in den üblichen, für die Polymerisation von Alkenen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisationsbedingungen sind an sich unkritisch, üblicherweise wird bei Drücken von 1 bis 1000 bar und Temperaturen von -50 bis +300°C gearbeitet.

In einer bevorzugten Ausführungsform werden unter Inertgasatmosphäre die Comonomere und aliphatischen Kohlenwasserstoffe vorgelegt, die Lösung auf Temperaturen von 50 bis 100°C erwärmt und mit Ethylen ein Druck von 1 bis 100 bar eingestellt. In dieses Gemisch wird unter Rühren das Katalysatorsystem, vorzugsweise mit Inertgasüberdruck eingespritzt.

Die Ethylen-Copolymerisate fallen als körniges Polymerisat an, das leicht mit den üblichen Methoden wie Verdampfen von den aliphatischen Kohlenwasserstoffen abgetrennt werden kann.

Die Dichte der entstehenden Produkte liegt i.a. im Bereich von 0,890 bis 0,945, bevorzugt 0,910 bis 0,930 g/cm³.

Die erfindungsgemäßen Ethylen-Copolymerisate zeichnen sich durch eine gute Morphologie, gleichmäßige Comonomerverteilung und durch eine günstige Molmassenverteilung aus, wodurch sie sich gut verarbeiten lassen.

Die erfindungsgemäßen Ethylen-Copolymerisate niederer Dichte eignen sich zur Herstellung von Fasern, Folien und Formkörpern.

Beispiele

Herstellung von Ethylen-Hex-1-en-Copolymerisaten niederer Dichte

Beispiel 1 bis 3

In einem 1 l Autoklaven wurden unter Argonatmosphäre 500 ml Heptan und verschiedene Mengen Hex-1-en vorgelegt. Die Lösung wurde auf 60°C erwärmt und mit Ethylen ein Druck von 15 bar eingestellt. In dieses Gemisch wurde unter Rühren mit einem Inertgasüberdruck von 20 bar 10 ml einer Toluollösung, die 1,6 mg ($5,5 \cdot 10^{-6}$ mol) Bis(cyclopentadienyl)zirkoniumdichlorid und 1 g ($19 \cdot 10^{-3}$ mol Al) Methylalumoxan enthielt, eingespritzt. Nach einer Reaktionszeit von 30 Minuten erhielt man ein körniges Ethylen-Hex-1-en-Copolymerisat, das in Heptan suspendiert war. Bei der Polymerisation traten keine Wandbeläge auf. 80 % des Copolymerisats wies eine Teilchengröße von 250 bis 500 µm auf.

Die eingesetzten Mengen an Hex-1-en, die Ausbeuten, die Aktivität der Katalysatorsysteme und Eigenschaften der Ethylen-Hex-1-en-Copolymerisate sind in der Tabelle zusammengestellt.

Die Viskositäten $\eta$ wurden nach DIN 53 733 bestimmt, die Dichte d an Preßplatten nach ASTM D-792, der Gewichtsmittelwert $\overline{M}_w$ und der Zahlenmittelwert $\overline{M}_n$ durch Gelpermeationschromatographie, der Schmelzpunkt $T_m$ durch definiertes Abkühlen der Schmelze (20°C/min) und erneutes Aufheizen, der Hex-1-en-Gehalt mittels $^{13}C$-NMR und die Schüttdichte nach DIN 53 468.

Tabelle

| Beispiel | Hex-1-en [ml] | Ausbeute [g] | Aktivität [kg Copolymerisat/mol Zr] | $\eta$ [dl/g] | d [g/cm$^3$] | $\overline{M}_w$ [g/mol] | $\overline{M}_w : \overline{M}_n$ | $T_m$ [°C] | Hex-1-en-Gehalt [Gew.%] | Schüttdichte [g/l] |
|---|---|---|---|---|---|---|---|---|---|---|
| 1 | 30 | 87,1 | 15 840 | 2,41 | 0,930 | 250 000 | 4,45 | 120,1 | 3,3 | 210 |
| 2 | 50 | 92,0 | 16 730 | 2,21 | 0,920 | 169 000 | 4,32 | 116,5 | 5,1 | 198 |
| 3 | 70 | 98,5 | 17 910 | 1,90 | 0,916 | 145 000 | 4,75 | 111,9 | 6,8 | 225 |

## Patentansprüche

1. Ethylen-Copolymerisate mit einer Dichte von höchstens 0,945 g/$cm^3$, erhältlich durch Polymerisation von einem Gemisch, enthaltend Ethylen, Comonomere und aliphatische Kohlenwasserstoffe durch Zugabe einer aromatischen Kohlenwasserstofflösung eines Katalysatorsystems, enthaltend als aktive Bestandteile unverbrückte Metallocenkomplexe von Metallen der IV. und V. Nebengruppe des Periodensystems und oligomere Aluminiumoxidverbindungen, wobei der Zusatz von Organoaluminiumverbindungen, die einen von n-Alkylgruppen verschiedenen Kohlenwasserstoffrest tragen, ausgeschlossen ist.

2. Ethylen-Copolymerisate nach Anspruch 1, dadurch gekennzeichnet, daß als Metallocenkomplex von Metallen der IV. und V. Nebengruppe des Periodensystems

   ein Metallocenkomplex der allgemeinen Formel I

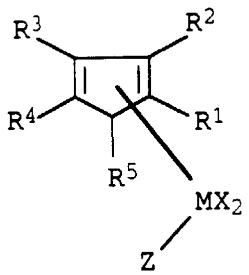

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder -$OR^6$, |
| wobei $R^6$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^5$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit |
| $R^7$ | $C_1$- bis $C_{10}$-Alkyl, $C_6$- bis $C_{15}$-Aryl oder $C_3$- bis $C_{10}$-Cycloalkyl, |
| Z | für X oder 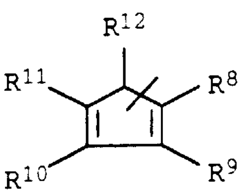 steht, |
| wobei die Reste $R^8$ bis $R^{12}$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit |
| $R^{13}$ | $C_1$- bis $C_{10}$-Alkyl, $C_6$- bis $C_{15}$-Aryl oder $C_3$- bis $C_{10}$-Cycloalkyl |

eingesetzt wird und als oligomere Aluminiumoxidverbindung
eine offenkettige oder cyclische Alumoxanverbindung der allgemeinen Formel II oder III

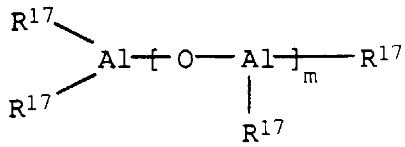

II

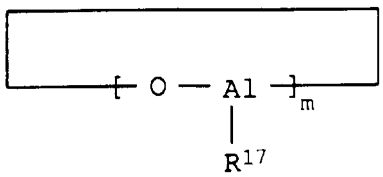

III

wobei $R^{17}$ eine $C_1$- bis $C_4$-Alkylgruppe bedeutet und m für eine ganze Zahl von 5 bis 30 steht.

3. Ethylen-Copolymerisate nach den Ansprüchen 1 bis 2, dadurch gekennzeichnet, daß als aliphatische Kohlenwasserstoffe Alkane mit 4 bis 15 C-Atomen oder deren Mischungen eingesetzt werden.

4. Verfahren zur Herstellung von Ethylen-Copolymerisaten gemäß den Verfahrensbedingungen von Anspruch 1.

5. Verwendung der Ethylen-Copolymerisate gemäß den Ansprüchen 1 bis 3 zur Herstellung von Fasern, Folien und Formkörper.

6. Fasern, Folien und Formkörper hergestellt aus Ethylen-Copolymerisaten gemäß den Ansprüchen 1 bis 3 als wesentliche Komponente.

**Claims**

1. An ethylene copolymer having a density of not more than 0.945 g/cm$^3$, obtainable by polymerizing a mixture containing ethylene, comonomers and aliphatic hydrocarbons and by adding an aromatic hydrocarbon solution of a catalyst system containing, as active components, unbridged metallocene complexes of metals of subgroups IV and V of the Periodic Table and oligomeric alumina compounds, the addition of organoaluminum compounds carrying a hydrocarbon radical which is not n-alkyl being excluded.

2. An ethylene copolymer as claimed in claim 1, wherein a metallocene complex of the formula I

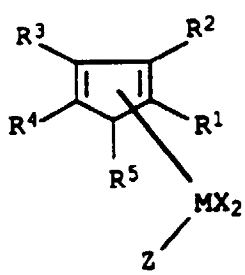

I

where

M is titanium, zirconium, hafnium, vanadium, niobium or tantalum,
X is fluorine, chlorine, bromine, iodine, hydrogen, $C_1$-$C_{10}$-alkyl, $C_6$-$C_{15}$-aryl or -$OR^6$,

$R^6$ is $C_1$-$C_{10}$-alkyl, $C_6$-$C_{15}$-aryl, alkylaryl, arylalkyl, fluoroalkyl or fluoroaryl, where each alkyl radical is of 1 to 10 carbon atoms and each aryl radical is of 6 to 20 carbon atoms,
$R^1$ to $R^5$ are each hydrogen, $C_1$-$C_{10}$-alkyl, 5-membered to 7-membered cycloalkyl, which in turn may carry $C_1$-$C_{10}$-alkyl as substituent, $C_6$-$C_{15}$-aryl or arylalkyl, where two adjacent radicals together may furthermore form a cyclic group of 4 to 15 carbon atoms, or $Si(R^7)_3$, $R^7$ is $C_1$-$C_{10}$-alkyl, $C_6$-$C_{15}$-aryl or $C_3$-$C_{10}$-cycloalkyl,
Z is X or

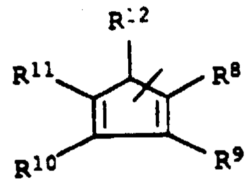

$R^8$ to $R^{12}$ are each hydrogen, $C_1$-$C_{10}$-alkyl, 5-membered to 7-membered cycloalkyl, which in turn may carry $C_1$-$C_{10}$-alkyl as a substituent, $C_6$-$C_{15}$-aryl or arylalkyl, where two adjacent radicals together may furthermore form a cyclic group of 4 to 15 carbon atoms, or $Si(R^{13})_3$, and $R^{13}$ is $C_1$-$C_{10}$-alkyl, $C_6$-$C_{15}$-aryl or $C_3$-$C_{10}$-cycloalkyl,
is used as the metallocene complex of metals of subgroups IV and V of the Periodic Table and an open-chain or cyclic alumoxane compound of the formula II or III

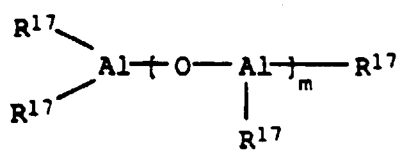

II

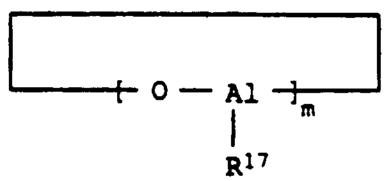

III

where $R^{17}$ is $C_1$-$C_4$-alkyl and m is an integer from 5 to 30, is used as the oligomeric alumina compound.

**3.** An ethylene copolymer as claimed in claim 1 or 2, wherein an alkane of 4 to 15 carbon atoms or a mixture of such alkanes is used as the aliphatic hydrocarbon.

**4.** A process for the preparation of an ethylene copolymer according to the process conditions of claim 1.

**5.** The use of an ethylene copolymer as claimed in any of claims 1 to 3 for producing fibers, films and moldings.

**6.** A fiber, film or molding produced from an ethylene copolymer as claimed in any of claims 1 to 3 as the essential component.

## Revendications

**1.** Copolymères d'éthylène avec une densité maximale de 0,945 $g/cm^3$, qui peuvent être obtenus par polymérisation d'un mélange contenant de l'éthylène, des comonomères et des hydrocarbones aliphatiques, par addition d'une solution dans un hydrocarbone aromatique d'un système de catalyseur, contenant à titre de constituants actifs des complexes métallocènes non-pontés de métaux des sous-groupes IV et V du système périodique et des composés d'oxyde d'aluminium oligomères, l'addition de composés d'organoaluminium qui portent un résidu hydrocarboné différent de groupes n-alkyles étant exclue.

**2.** Copolymères d'éthylène selon la revendication 1, caractérisés en ce qu'on utilise à titre de complexe métallocène des métaux du sous-groupe IV et V du système périodique un complexe métallocène répondant à la Formule I générale :

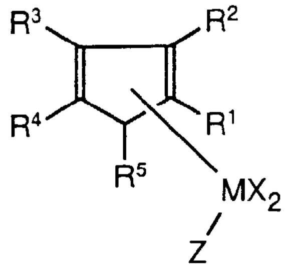

dans laquelle les substituants présentent la signification suivante :

| | |
|---|---|
| M | représente du titane, du zirconium, de l'hafnium, du vanadium, du niobium ou du tantale, |
| X | représente un atome de fluor, un atome de chlore, un atome de brome, un atome d'iode, un atome d'hydrogène, un groupe alkyle en $C_1$ à $C_{10}$, un groupe aryle en $C_6$ à $C_{15}$ ou un groupe $-OR^6$, |
| où $R^6$ | représente un groupe alkyle en $C_1$ à $C_{10}$, un groupe aryle en $C_6$ à $C_{15}$, un groupe alkylaryle, un groupe arylalkyle, un groupe fluoroalkyle ou un groupe fluoroaryle avec respectivement 1 à 10 atomes de carbone dans le résidu alkyle et 6 à 20 atomes de carbone dans le résidu aryle, |
| $R^1$ à $R^5$ | représentent un atome d'hydrogène, un groupe alkyle en $C_1$ à $C_{10}$, un groupe cycloalkyle de 5 à 7 membres, qui peut lui-même porter un groupe alkyle en $C_1$ à $C_{10}$ à titre de substituant, un groupe aryle en $C_6$ à $C_{15}$, ou un groupe arylalkyle, deux résidus adjacents pouvant éventuellement représenter ensemble des groupes cycliques présentant 4 à 15 atomes de carbone, ou un groupe $Si(R^7)_3$ avec |
| $R^7$ | représente un groupe alkyle en $C_1$ à $C_{10}$, un groupe aryle en $C_6$ à $C_{15}$, ou un groupe cycloalkyle en $C_3$ à $C_{10}$, |
| Z | représente X ou |

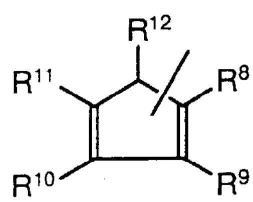

,

| | |
|---|---|
| où les résidus $R^8$ à $R^{12}$ | représentent un atome d'hydrogène, un groupe alkyle en $C_1$ à $C_{10}$, un groupe cycloalkyle de 5 à 7 membres, qui peut lui-même porter un groupe alkyle en $C_1$ à $C_{10}$ à titre de substituant, un groupe aryle en $C_6$ à $C_{15}$, ou un groupe arylalkyle, et où deux résidus adjacents peuvent éventuellement représenter ensemble des groupes cycliques présentant 4 à 15 atomes de carbone, ou $Si(R^{13})_3$ avec |
| $R^{13}$ | représente un groupe alkyle en $C_1$ à $C_{10}$, un groupe aryle en $C_6$ à $C_{15}$, ou un groupe cycloalkyle en $C_3$ à $C_{10}$, |

et à titre de composé d'oxyde d'aluminium oligomère
un composé alumoxane à chaîne ouverte ou cyclique répondant à la Formule générale II ou III

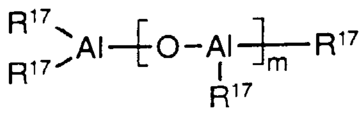

II

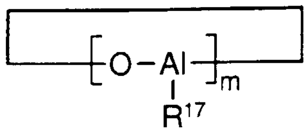

III

où $R^{17}$ représente un groupe alkyle en $C_1$ à $C_4$ et m signifie un nombre entier de 5 à 30.

**3.** Copolymères d'éthylène selon les revendications 1 à 2, caractérisés en ce qu'on utilise à titre d'hydrocarbones aliphatiques des alcanes avec 4 à 15 atomes de carbone, ou leurs mélanges.

**4.** Procédé de préparation de copolymères d'éthylène selon les conditions de procédé de la revendication 1.

**5.** Utilisation des copolymères d'éthylène selon les revendications 1 à 3 pour la préparation de fibres, de feuilles et d'objets moulés.

**6.** Fibres, feuilles et objets moulés fabriqués à partir de copolymères d'éthylène selon les revendications 1 à 3 à titre de composante substantielle.